# EUROPEAN PATENT APPLICATION

(11) **EP 1 615 434 A1**
(43) Date of publication of application: **11.01.2006**
(21) Application number: 04727706.6
(22) Date of filing: 15.04.2004
(51) Int. Cl.: H04N 7/08

(54) **ELECTRONIC WATERMARK-CONTAINING MOVING PICTURE TRANSMISSION SYSTEM, ELECTRONIC WATERMARK-CONTAINING MOVING PICTURE TRANSMISSION METHOD, INFORMATION PROCESSING DEVICE, COMMUNICATION CONTROL DEVICE, ELECTRONIC WATERMARK-CONTAINING MOVING PICTURE PROCESSING PROGRAM, AND STORAGE MEDIUM CONTAINING ELECTR**

(30) Priority: 17.04.2003 JP 2003112853
(71) Applicant: NIPPON TELEGRAPH AND TELEPHONE CORPORATION, Tokyo 100-8116 (JP)
(72) Inventor: FUJII, Tatsuya, NTT Intellectual Property Center, Musashino-shi, Tokyo 1808585 (JP); YAMAGUCHI, Takahiro, NTT Intellectual Property Ctr, Musashino-shi, Tokyo 1808585 (JP); SHIRAI, Daisuke, NTT Intellectual Property Center, Musashino-shi, Tokyo 1808585 (JP); FUJII, Tetsuro, NTT Intellectual Property Center, Musashino-shi, Tokyo 1808585 (JP)
(74) Representative: Maury, Richard Philip
(86) International application number: PCT/JP2004/005357
(87) International publication number: WO 2004/093448

(57) **Abstract**

A technique is disclosed involving embedding plural differing digital watermarks into one type of input moving image data, creating plural moving image data series, encoding the created moving image data series, generating a new moving image data series from the moving image data series based on addition ID information, and transferring the new moving image data series or transmitting the same via a network. At a reception side, the data series is decoded/reproduced, the reproduced image data are divided into plural regions, and a digital watermark is detected for each of the divided regions so that the addition ID information may be detected.

## Description

### TECHNICAL FIELD

The present invention relates generally to a digital watermark-containing moving image transmission technique, and particularly to a technique of secretly embedding individual addition ID information that is set for each session for delivering moving image data to each individual user as a digital watermark into moving image data in a moving image display system that stores and displays digital moving image data, or a moving image delivery system that transmits stored digital moving image data using a network, and presents the data to a network-connected user.

### BACKGROUND ART

In constructing a video-on-demand system for storing digital video contents in a server, and displaying the contents on the site or delivering the contents via a network according to a user request, preventing unauthorized use and leakage of the contents is one important issue that needs to be addressed. Various measures are used to realize content protection including setting access authority in the server to enable only authorized users to access the contents, conducting authentication using a specific ID assigned to a user terminal such as in a mobile telephone, and encrypting data so that only authorized users will be able to decode the data using a decryption key, for example.

As security techniques for ensuring copyright protection and preventing illegal content copying and distribution, the digital watermarking technique may be used in addition to authentication and encryption techniques. The digital watermarking technique embeds ID information into digital contents such as audio, music, still images, and video without affecting the quality of the digital content. Although this technique itself does not realize a function of blocking illegal copying like the encryption technique, hidden information such as that indicating the original owner of contents that have been copied may be extracted using this technique, and thereby, it may be possible to claim copyrights to the contents that have been illegally copied, for example (e.g., see "Digital Watermarking Techniques and their Comparative Indexes", Matsui, Journal of the Institute of Image Electronics Engineers of Japan, Vol. 27, No. 5, pp.483-491, 1998).

It is noted that there are mainly two methods for embedding a digital watermark in an image signal (e.g., see "Video Watermarking", Sakazawa, Journal of the Institute of Image Electronics Engineers of Japan, Vol. 31, No. 3, pp.421-425, 2002).

A first one of the methods involves dividing the pixels of image data into plural blocks, and directly embedding watermark information into bit information representing the brightness of the pixels (pixel brightness value). This method relies on the nature of human vision; that is, this method relies on the fact that a signal corresponding to a dark pixel located close to a bright pixel is difficult to recognize, and a slight change in brightness as a result of manipulation of a lower bit is not easily perceptible, for example. The method as is described above involving direct manipulation of the pixel brightness value has the advantage of requiring a small computation load. However, this method is disadvantageous in that the information added as a digital watermark may often be lost and fail to be reproduced as a result of image processes such as encoding, compression, or alteration of the image.

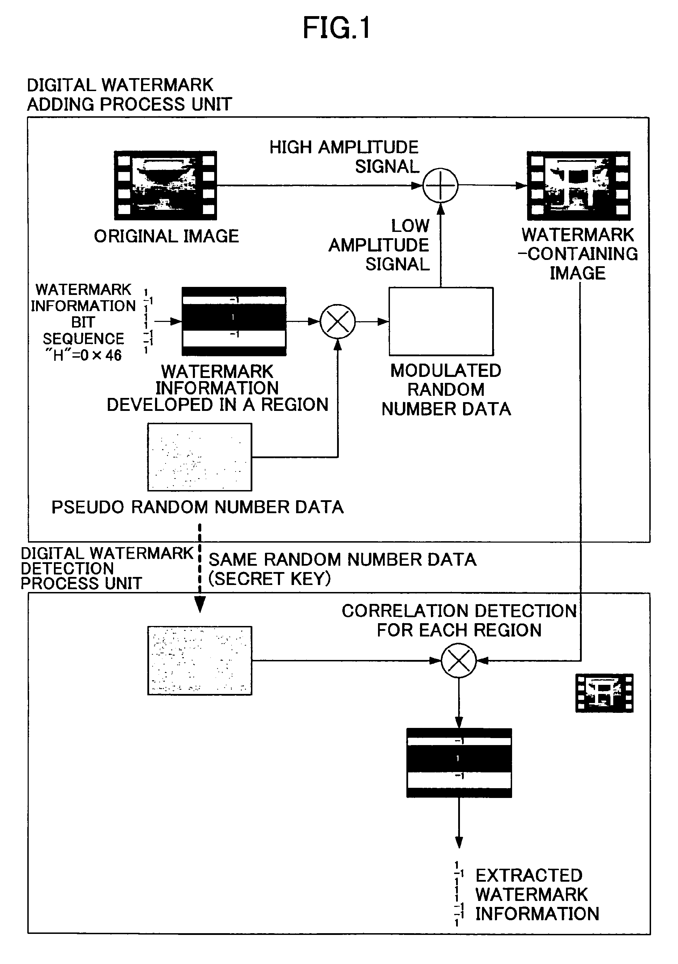

The other one of the methods involves transforming the image data into frequency components through fast Fourier transform (FFT), spectral diffusion, or discrete cosine transform (DCT), for example, and embedding watermark information into a particular frequency component while minimizing its influence on image quality. FIG.1 illustrates an example of using spectral diffusion to embed addition information as a digital watermark into one frame of an image signal. In this example, a pseudo random number data series having the same size as the image is provided, and this is divided into image plane regions. The pseudo random number data of the respective image regions are multiplied by 1 or -1 according to the bit sequence [0, 1] of the watermark information to be added to create a modulated pseudo random number data series. An image obtained by adding such data series to the original image signal is output as a watermark-containing image.

At the apparatus reproducing the image, a correlation coefficient between the watermark-containing image and the pre-modulated pseudo random number data is calculated for each region to reproduce the embedded watermark information bit sequence.

In this case, in order to maintain the quality of the image, the amplitude of the pseudo random number data is preferably set to be as low as possible. However, when the amplitude of the pseudo random number data is low, watermark information may be easily lost upon processing and compression of the watermark-containing image. Accordingly, trade- off between the above factors needs to be considered. Also, it is noted that the pseudo random number data and the division method for dividing an image into regions for the respective bits of the watermark information correspond to keys for reproducing the watermark information, and need to be kept under strict secrecy by the rightful owner of the contents.

Such a method involving transforming the image data into frequency components is advantageous in that the embedded watermark information is not easily lost through image processes such as image alteration or encoding/compression. However, this method has a disadvantage in that the processing time for embedding and extracting watermark information may be long since frequency transform and inverse transform processes need to be performed.

It is noted that by using the technique of embedding ID information as digital watermarks, the ownership of contents may be easily proved; however, this in itself does not have the effect of thwarting illegal copying. Thus, it is necessary to identify a copying source from illegally copied contents by embedding different sets of ID information into each set of contents being delivered through a network. If a system can be realized for determining the leakage (illegal usage) route of contents and identifying a willful infringer, such a system may make a great contribution to preventing illegal copying.

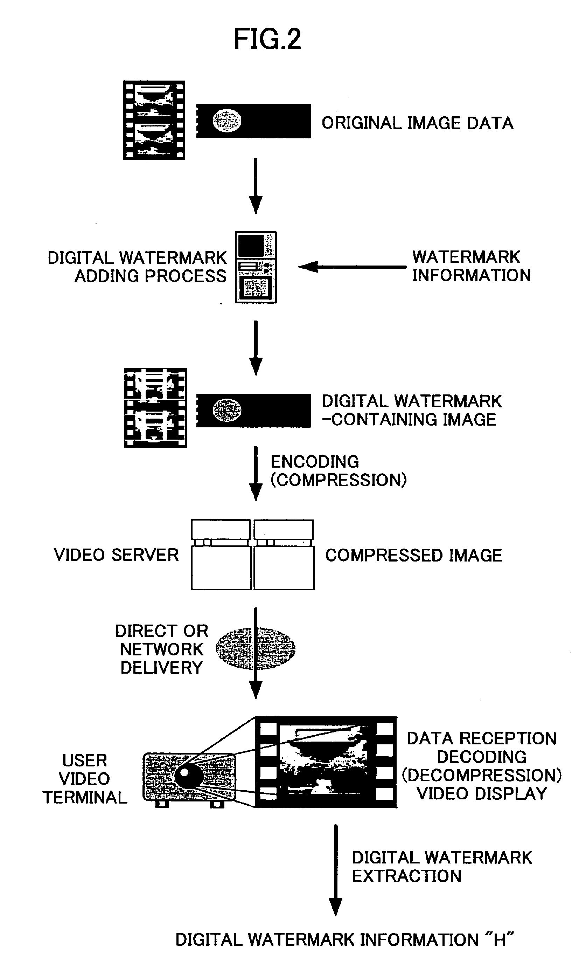

On the other hand, in the case of handling contents with a large capacity such as digital cinema and other contents adopting high image quality, the video contents to be delivered via a network are conventionally encoded and compressed due to restrictions in the transmission band and transmission cost for delivering the video contents. In this case, as is shown in FIG.2, the digital watermark information needs to be embedded before encoding the contents.

However, in a video contents display system for embedding digital watermarks into video contents according to the prior art, if watermark information is individually assigned to contents being delivered to each individual user, the process of adding digital watermarks has to be performed each time contents are delivered to a particular user. Also, in the case of conducting network transmission, since the encoded/compressed moving image data are stored in the server, the encoded data have to be decoded to conduct a process of embedding watermark information, and encoded once more. Such processes require a large computation work load, and are impractical both from a technical and economical standpoint.

This technical problem is exacerbated in the case of delivering video contents having a large capacity such as digital cinema. As a result, illegal copying of contents may not be effectively prevented by adding individual digital watermark information in the manner described above.

### DISCLOSURE OF THE INVENTION

The present invention has been conceived in response to the problems described above, and its object is to provide a technique relating to digital watermark-containing moving image transmission that is implemented upon storing and displaying digital moving image data or transmitting the digital moving image data via a network, the technique being configured to prevent illegal copying through identifying the access route of delivered moving image data that are illegally used or illegally copied.

The above object of the present invention may be achieved by providing a digital watermark-containing moving image transmission system including:
a moving image reproducing apparatus that includes
   moving image input means for inputting one type of moving image data;
   watermark-containing data generating means for embedding a plurality of differing sets of digital watermark information into the input moving image data, creating a plurality of watermark-containing moving image data series, and encoding the created watermark-containing moving image data series;
   ID information adding means for generating a new moving image data series from the plural watermark-containing moving image data series based on addition ID information including coded information corresponding to at least one of moving image identification information, time/date information, and user information;
   reproducing means for decoding and displaying the moving image data series generated by the ID information adding means; and
an addition ID information detecting apparatus that divides the moving image data series displayed by the moving image reproducing apparatus into a plurality of regions, and detects the addition ID information for each of the divided regions using a digital watermark detecting circuit.

The above object may also be achieved by providing an information processing apparatus that is configured to transmit stored digital moving image data via a network, the apparatus including:
moving image input means for inputting one type of moving image data;
watermark-containing data generating means for embedding a plurality of differing sets of digital watermark information into the input moving image data, creating a plurality of watermark-containing moving image data series, and encoding the created watermark-containing moving image data series; and

ID information adding means for generating a new moving image data series from the plural watermark-containing moving image data series based on addition ID information including coded information corresponding to at least one of moving image identification information, time/date information, and user information.

It is noted that in one preferred embodiment of the present invention, the ID information adding means may be configured to successively select one image frame from a plurality of image frames of the plural moving image data series based on the addition ID information and output the successively selected image frames as the new moving image data series.

In another preferred embodiment of the present invention, the ID information adding means may be configured to successively select one group of image frames from a plurality of groups of image frames of the plural moving image data series based on the addition ID information and output the successively selected group of image frames as the new moving image data series.

According to another preferred embodiment, in the information processing apparatus of the present invention,
each of a plurality of image frames of the plural moving image data series may be spatially divided into a plurality of regions, and a plurality of divided region moving image data series may be generated for each of the divided regions; and
the ID information adding means may be configured to successively select one divided region image frame from a plurality of divided region image frames of the plural divided region moving image data series corresponding to one of the divided regions based on the addition ID information, compose the successively selected divided region image frames corresponding to said one of the divided regions with successively selected divided region image frames corresponding to another one of the divided regions, and output the composed divided region image frames as the new moving image data series.

The above object may also be achieved by providing a communication control apparatus in a system including a server and a terminal that are connected to a network, the apparatus including:
means for receiving a plurality of watermark-containing moving image data series from the server or another communication apparatus;
ID information adding means for generating a new moving image data series from the received plural watermark-containing moving image data series based on addition ID information including coded information corresponding to at least one of moving image identification information, time/date information, and user information; and
moving image delivering means for delivering the moving image data series generated by the ID information adding means to the terminal or another communication control apparatus.
   As is described above, according to the present invention, plural digital watermark-containing moving image data series corresponding to one type of moving image data having plural differing sets of digital watermark information added thereto are created beforehand. Also, encoding/compression processes may be performed beforehand as is necessary or desired. Then, one of the plural digital watermark-containing moving image data series is successively selected with respect to the time direction; namely, with respect to every image frame, to compose a new moving image data series. Alternatively, each image frame of the plural moving image data series may be divided into regions to created plural divided region moving image data series, and a corresponding data portion may be retrieved from the divided region moving image data series for every divided region to compose a whole image. It is noted that the process of composing one moving image data series through partial selection of plural moving image data series may be performed at a node (communication control apparatus) on a network. Also, a redundant encoding process may be performed on the digital watermark information beforehand, and the frame/divided region selection process may be performed based on the processing results thereof.
   It is noted that in the case of composing moving image data in frame units, identification information indicating the digital watermark information that is added to the respective frames of the moving image data may be embedded into the moving image data as addition information (addition ID information); and in the case of implementing image plane division, identification information indicating the digital watermark information added to the respective divided image regions may be embedded into the moving image data as addition information (addition ID information). In such cases, an image may have digital watermarks embedded therein in frame units or in divided region units and be encoded/compressed beforehand so that upon transmission, a moving image data series with the desired addition information added thereto may be easily generated by merely performing partial selection of data, and composition thereof. Accordingly, individual addition ID information may be assigned to large capacity contents such as movies through real-time processing.

Also, even in a case where plural users reside in the delivery network, by arranging the division/composition processes to be performed at an edge node (communication control apparatus) closest to the user terminal within the delivery network, individual addition ID information may be assigned to the respective users with a video stream limited to the types of digital watermarks by creating different combinations thereof.

Also, by performing redundant encoding on the addition ID information using error correction codes, even when digital watermark information is lost due to editing of contents, such an error may be corrected and the digital watermark information may be properly reproduced.

### BRIEF DESCRIPTION OF THE DRAWINGS

FIG. 1 is a diagram illustrating a fundamental principle of digital watermarking (in the case of implementing the spectral diffusion method) ;
FIG. 2 is a diagram illustrating an example of displaying digital watermark-containing image data according to the prior art;
FIG. 3 is a diagram illustrating a fundamental configuration of the present invention;
FIG. 4 is a diagram illustrating a fundamental principle of the present invention;
FIG. 5 is a block diagram illustrating a configuration of an apparatus according to a first embodiment of the present invention;
FIG. 6 is a diagram illustrating a data series that is generated at an ID information adding unit according to the first embodiment of the present invention;
FIG. 7 is a flowchart illustrating operations according to the first embodiment of the present invention;
FIG. 8 is a diagram illustrating an ID information adding circuit that decomposes and composes a video sequence in frame units (in time series) and an addition ID information extracting circuit according to the first embodiment of the present invention;
FIG.9 is a block diagram illustrating a system configuration according to a second embodiment of the present invention;
FIG.10 is a sequence chart illustrating operations according to the second embodiment of the present invention;
FIG.11 is a block diagram illustrating a system configuration according to a third embodiment of the present invention;
FIG.12 is a diagram illustrating a configuration of a delivery network node according to a third embodiment of the present invention;
FIG.13 is a sequence chart illustrating operations according to the third embodiment of the present invention;
FIG.14 is a diagram illustrating an example of adding five bits of addition ID information according to a first example of the present invention;
FIG.15 is a diagram illustrating a configuration of an ID information adding circuit that decomposes and composes a video stream in divided image region units according to a third example of the present invention;
FIG.16 is a diagram illustrating an example of decomposing/composing a video stream in divided image region units based on addition ID information according to the third example of the present invention;
FIG.17 is a diagram illustrating an exemplary video delivery system according to a fourth example of the present invention that uses a plurality of video streams corresponding to identical contents with differing sets of watermark information added thereto;
FIG.18 is a diagram illustrating an example of decomposing/composing streams in a delivery network node using two video streams according to the fourth example of the present invention;
FIG.19 is a diagram illustrating an example of composing three different types of streams in the delivery network node from two video streams according to a fifth example of the present invention;
FIG.20 is a diagram illustrating an example of using error correction codes in addition ID information according to a sixth example of the present invention;
FIG.21 is a diagram illustrating an example of detecting the addition ID information with the error correction code from edited/tampered video contents according to the sixth example of the present invention; and
FIG.22 is a diagram illustrating an example of detecting the addition ID information with the error correction code from frame rate-converted video contents according to the sixth example of the present invention.

### BEST MODE FOR CARRYING OUT THE INVENTION

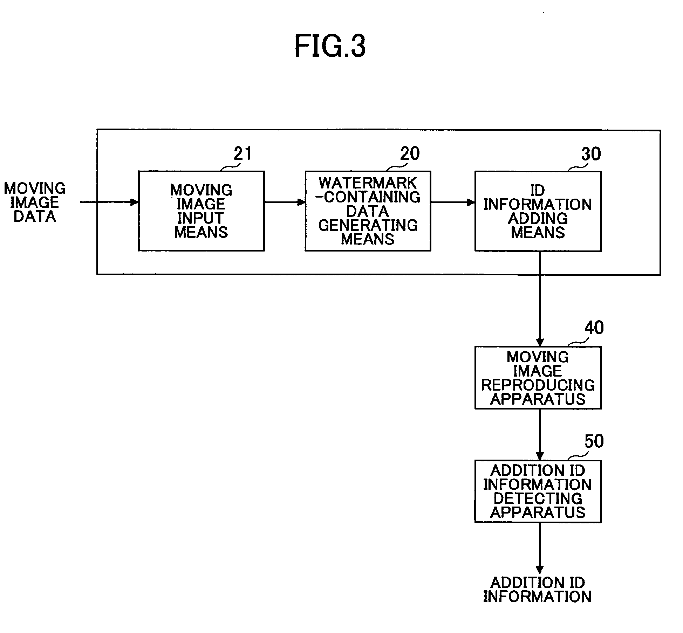

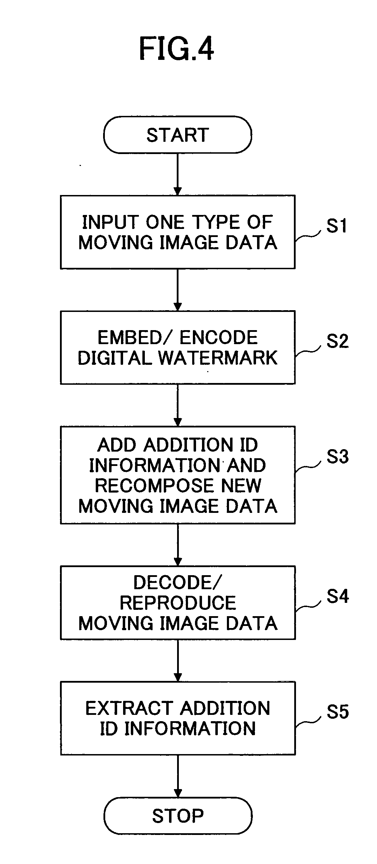

First, an outline of the present invention is described with reference to FIGS.3 and 4.

FIG.3 is a diagram schematically illustrating a configuration of a digital watermark-containing moving image transmission system of the present invention. The digital watermark-containing moving image transmission system of the present invention includes moving image input means 21 for inputting one type of moving image data; watermark-containing data generating means 20 for embedding differing sets of digital watermark information into the input image data to create plural watermark-containing moving image data series, and encoding the created watermark-containing moving image data series; ID information adding means 30 for generating a new moving image data series from the plural watermark-containing moving image data series based on at least one of moving image identification information, time/date information, and/or user information; a moving image reproducing apparatus 40 that includes reproducing means for decoding and displaying the moving image data series generated by the ID information adding means 30; and an addition ID information detecting apparatus 50 that divides the moving image data series displayed by the moving image reproducing apparatus 40 into regions and detects the addition ID information for each of the divided regions using digital watermark detecting means.

FIG.4 is a flowchart schematically illustrating a digital watermark-containing moving image transmission method of the present invention. The digital watermark-containing moving image transmission method for storing and displaying digital moving image data includes the steps of inputting one type of moving image data (step 1); embedding differing sets of digital watermark information into the input moving image data to create plural watermark-containing moving image data series and encoding the watermark-containing moving image data series (step 2);
generating a new moving image data series from the plural watermark-containing moving image data series based on at least one of moving image identification information, time/date information, and/or user information (step 3); decoding and displaying the generated moving image data series (step 4); and dividing the displayed moving image data series into regions and detecting addition ID information for each of the divided regions using a digital watermark detecting circuit (step 5).

In the following, embodiments of the present invention are described with reference to the accompanying drawings.

### (First Embodiment)

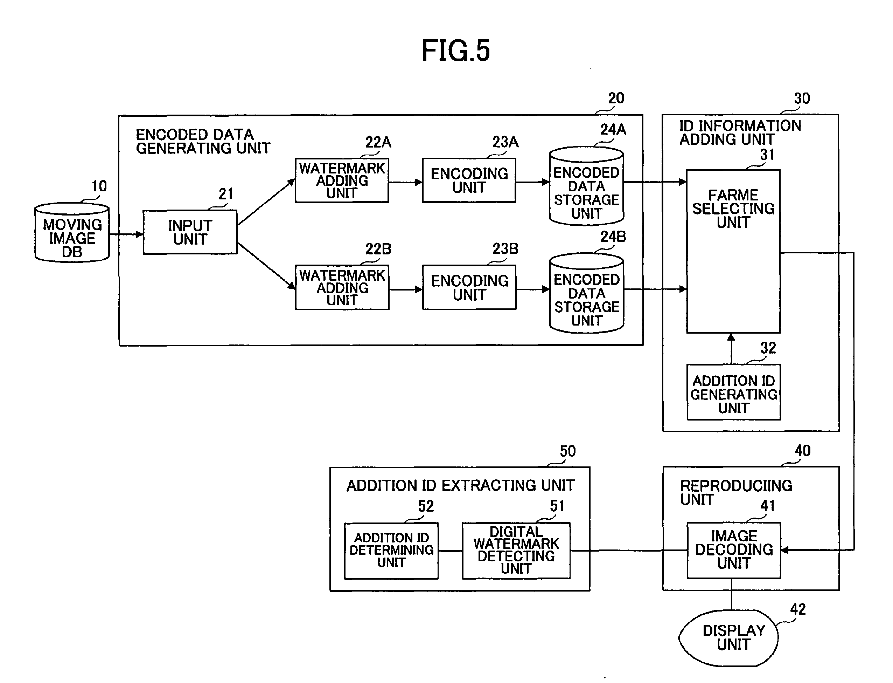

FIG.5 is a diagram illustrating an apparatus configuration according to a first embodiment of the present invention.

The apparatus shown in this drawing includes a moving image database (DB) 10, an encoded data generating unit 20, an ID information adding unit 30, a reproducing unit 40, and an addition ID extracting unit 50.

The encoded data generating unit 20 includes an input unit 21, two watermark adding units 22A and 22B, two encoding units 23A and 23B, and two encoded data storage units 24A and 24B.

The input unit 21 is configured to read moving image data from the moving image DB 10, divide the read data into two, and output the divided data to the watermark adding units 22A and 22B, respectively.

The watermark adding units 22A and 22B are configured to embed respectively two sets of digital watermark information that are prepared beforehand into the two sets of moving image data.

It is noted that encoding units 23A and 23B may correspond to encoding circuits. The encoding units 23A and 23B are configured to encode and compress the digital watermark-embedded moving image data that are output from the watermark adding units 22A and 22B, respectively.

The encoded data storage units 24A and 24B are configured to store moving image data that are encoded and compressed by the encoding units 23A and 23B, respectively.

The ID information adding unit 30 includes a frame selecting unit 31 and an addition ID generating unit 32.

It is noted that the frame selecting unit 31 may correspond to a selector circuit. The frame selecting unit 31 is configured to select image data output from either the encoded data storage unit 24A or 24B of the encoded data generating unit 20 according to addition ID information supplied from the addition ID generating unit 32 and add the addition ID information to the selected image data to recompose one moving image data series.

The addition ID generating unit 32 is configured to encode information for identifying moving image data such as moving image identification information (contents information), data/time information, and/or user information as addition ID information, and supply the ID information to the frame selecting unit 31.

The reproducing unit 40 includes an image decoding unit 41. The image decoding unit 41 is configured to directly decode the moving image data series with addition ID information added thereto that is supplied from the addition ID information adding unit 30, and display the decoded image at a display unit 42 (e.g., monitor or a projector).

The addition ID extracting unit 50 includes a digital watermark detecting unit 51 and an addition ID determining unit 52.

The digital watermark detecting unit 51 is configured to detect a digital watermark from the displayed image data using a known digital watermark detecting circuit.

The addition ID determining unit 52 is configured to retrieve the addition ID information from a series made up of a combination of the detected watermark information. It is noted that the addition ID information retrieved in this case may correspond to moving image identification information, time/date information, and/or user information, for example.

In the following, the data series generated at the ID information adding unit 30 is described.

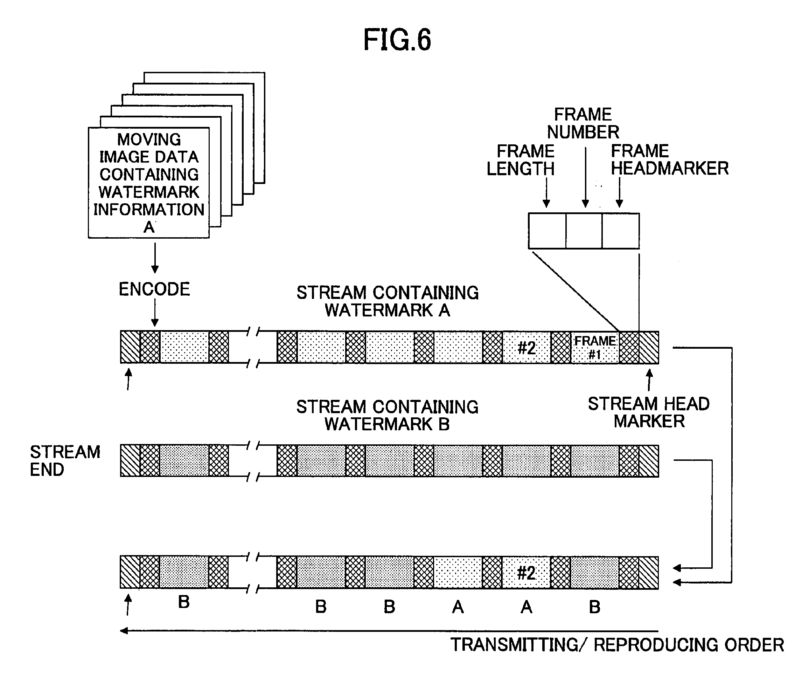

FIG.6 is a diagram illustrating a data series generated at the ID information adding unit according to the first embodiment of the present invention.

At the frame selecting unit 31, a stream containing watermark A (stream A) that is obtained by embedding digital watermark A into a video stream and encoding the video stream, and a stream containing watermark B (stream B) that is obtained by embedding digital watermark B into a video stream and encoding the video stream are input. The input digital watermark-containing streams A and B have a marker in each frame that includes a frame length, a frame number, and a frame head marker for enabling division of the respective streams into frame units, and the streams A and B each made up of a sequence of such frames include stream head markers at their respective heads. The frame selecting unit 31 selects frames of either stream A or stream B with the same frame number based on the addition ID information, and connects the selected frames to compose and output one stream (data series).

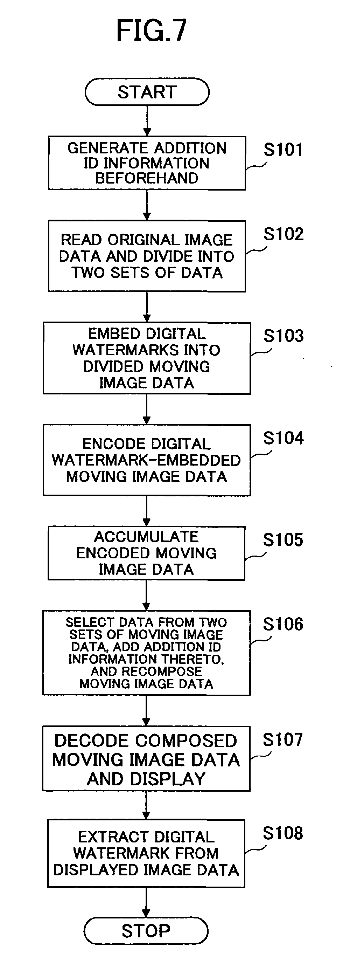

FIG.7 is a flowchart illustrating operations according to a first embodiment of the present invention.

Step 101: at the addition ID generating unit 32, generate addition ID information beforehand.

Step 102: at the input unit 21, read moving image data from the moving image DB 10, divide the moving image data into two, and output the divided image data to the watermark adding units 22A and 22B, respectively.

Step 103: at the watermark adding units 22A and 22B, embed differing sets of digital watermark information into the moving image data, and output the digital watermark-embedded moving image data to the encoding units 23A and 23B, respectively.

Step 104: at the encoding units 23A and 23B, perform encoding and compression processes on the digital watermark-embedded moving image data.

Step 105: write the encoded/compressed moving image data in the encoded data storage units 24A and 24B, respectively.

Step 106: at the frame selecting unit 31, select/discard the encoded moving image data from the two encoded data storage units 24A and 24B based on the addition ID information, and recompose one moving image data series.

Step 107: at the image decoding unit 41, decode and display the recomposed moving image data (series) at the display unit 42.

Step 108: extract a digital watermark from the image data displayed by the display unit 42 using a known digital watermark detecting circuit, and retrieve the addition ID information from the extracted digital watermark.

According to the present embodiment, plural data encoding processes, ID adding processes, and moving image data decoding processes may be performed within one apparatus. That is, the present embodiment relates to a locally closed moving image system that does not use a network. This system is conceived in consideration of a case in which a third person illegally copies a moving image by capturing image data displayed on a projector or a monitor using a camera, for example, as opposed to obtaining a digital copy of the moving image data.

In the following, processes of the ID information adding unit (circuit) 30 are described in detail.

It is noted that in the following descriptions, it is assumed that the format of the addition ID information (e.g., information order and size), the type (number) of the digital watermark, and the bit sequence of the addition ID information (manner of combining moving image data with differing digital watermarks) are uniquely defined in the system beforehand.

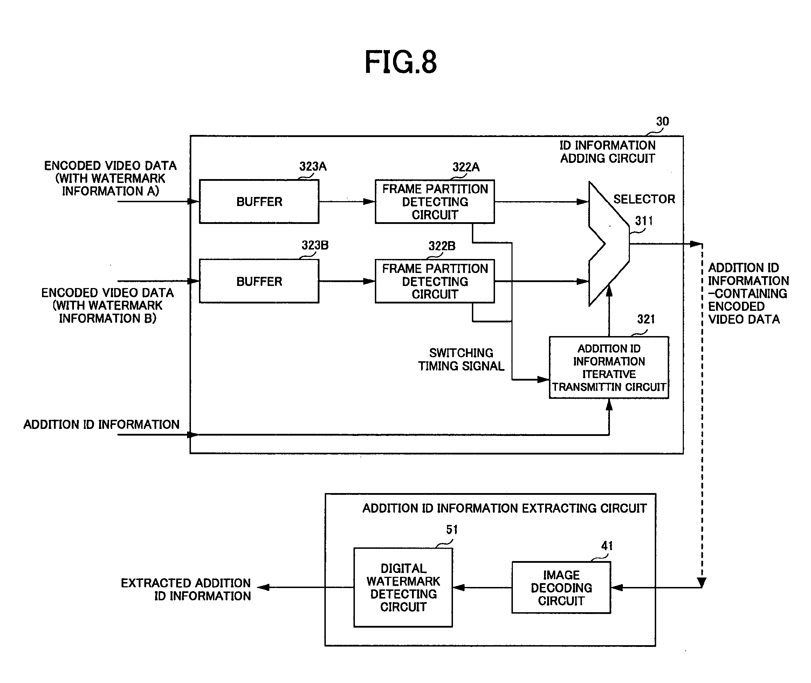

FIG.8 is a diagram illustrating an ID information adding circuit that decomposes/composes a video stream in frame units (time series) and an addition ID information extracting circuit according to the first embodiment of the present invention. In the illustrated example, the frame selecting unit 31 of the ID information adding unit 30 is realized by a selector 311, two frame partition detecting circuits 322A and 322B, and two buffers 323A and 323B; and the addition ID generating unit 32 of the ID adding unit 30 is realized by an addition ID information iterative transmission circuit 321.

In FIG.8, at the frame selecting unit 31, encoded moving image data into which two different sets of digital watermark information are embedded are stored in the buffers 323A and 323B, respectively. While synchronizing the time progression of the two streams corresponding to the stored moving image data, the streams are divided into frame data units by the frame partition detecting circuits 322A and 322B, respectively, and the divided frame data are transmitted to the selector 311.

The selector 311 selects and outputs either of the transmitted frame data according to the addition ID information that is transmitted one bit at a time from the addition ID information iterative transmission circuit 321 in accordance with the frame periods.

At an addition ID information extracting circuit directly receiving the moving image data series (video data), the image signal is decoded and reproduced by the image decoding circuit 41, after which watermark information is retrieved by the digital watermark detecting circuit (digital watermark detecting unit) 51 to obtain addition ID information from an arrangement of two types of digital watermarks. It is noted that the addition ID information extracting circuit of FIG.8 may be realized by the reproducing unit 40 and the addition ID extracting unit 50 of FIG.5.

### (Second Embodiment)

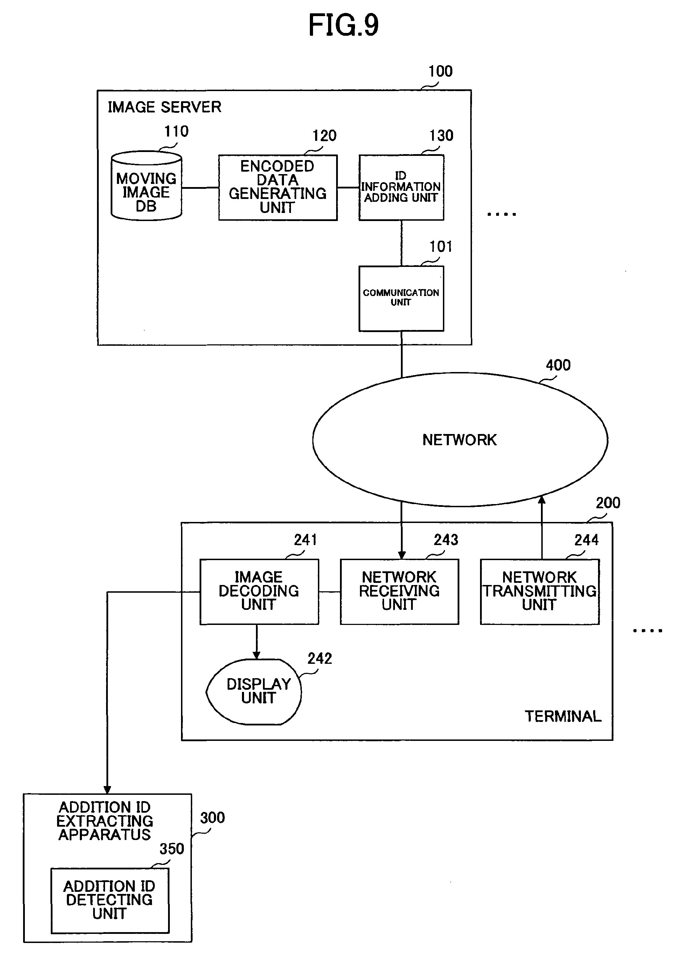

FIG.9 is a diagram illustrating a system configuration according to a second embodiment of the present invention.

The illustrated system includes an image server 100, a terminal 200, an addition ID extracting apparatus 300, and a network 400 that interconnects the image server 100 and the terminal 200.

It is noted that in the illustrated example, only one image server 100 and one terminal 200 are shown for the sake of simplifying the following descriptions; however, the system may be made up of plural image servers 100 and plural terminals 200 as well.

The image server 100 includes a moving image database (DB) 110, an encoded data generating unit 120, an ID information adding unit 130, and a communication unit 101. It is noted that the moving image database (DB) 110, the encoded data generating unit 120, and the ID information adding unit 130 have functions identical to those of the moving image database (DB) 10, the encoded data generating unit 20, and the ID information adding unit 30 of the first embodiment, and thereby, detailed descriptions of these components are omitted.

The terminal 200 includes a network transmitting unit 244, an image decoding unit 241, a network receiving unit 243, and a display unit 242. It is noted that the image decoding unit 241 and the display unit 242 have functions identical to those of the image decoding unit 41 and display unit 42 of the first embodiment, and thereby, detailed descriptions of these components are omitted.

The network transmitting unit 244 is configured to issue a moving image data request to the image server 100.

The network receiving unit 243 receives from the image server 100 encoded digital watermark-containing moving image data having ID information added thereto via the network 400.

It is noted that the addition ID detecting unit 350 of the addition ID extracting apparatus 300 has functions that are identical to those of the addition ID extracting unit 50 of the first embodiment, and thereby, detailed descriptions thereof are omitted.

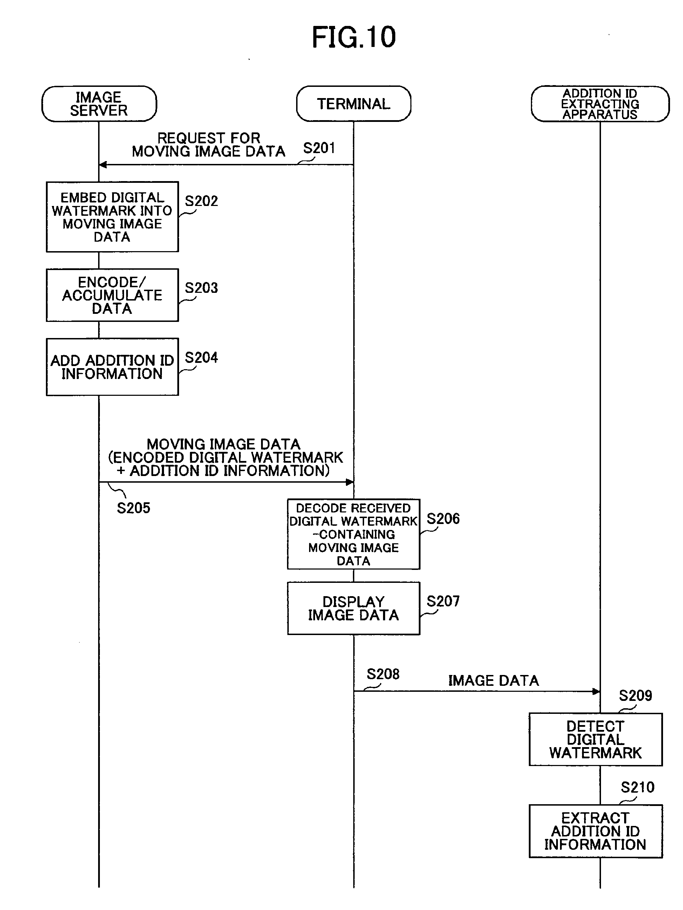

FIG.10 is a sequence chart illustrating operations according to the second embodiment of the present invention.

Step 201: issue a moving image data request at the network transmitting unit 244 for transmission from the terminal 200 to the image server 100.

Step 202: at the image server 100, when the communication unit 101 receives the request from the terminal 200, read the moving image data from the moving image DB 110, and embed digital watermarks into the moving image data at the encoded data generating unit 120.

Step 203: further, at the encoded data generating unit 120, perform encoding/compression processes on the digital watermark-embedded moving image data, and store the encoded moving image data.

Step 204: at the ID information adding unit 130, select/discard the stored moving image data based on the addition ID information, add the addition ID information, recompose the moving image data, and generate one moving image data series. It is noted that these processes are identical to the operation processes of FIGS.6 and 8 described in relation to the first embodiment.

Step 205: transmit the recomposed moving image data (series) from the communication unit 101 to the terminal 200 requesting for the moving image data via the network 400.

Step 206: at the terminal 200, receive the moving image data (series) delivered from the image server 100 at the network receiving unit 243, and decode the received moving image data at the image decoding unit 241.

Step 207: display the decoded moving image data at the display unit 242.

Step 208: input the image data displayed at the display unit 242 to the addition ID extracting apparatus 300.

Step 209: detect a digital watermark from the image data at the addition ID detecting unit 350 of the addition ID extracting apparatus 300.

Step 210: retrieve the addition ID information from the detected watermarks based on the series of combined watermark information.

### (Third Embodiment)

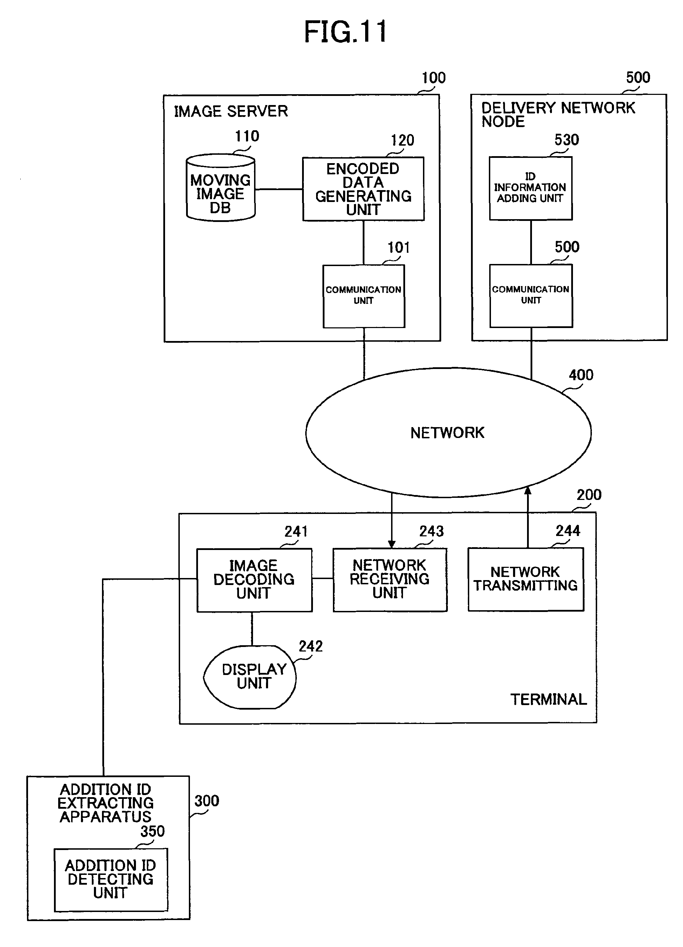

FIG.11 is a diagram illustrating a system configuration according to a third embodiment of the present invention.

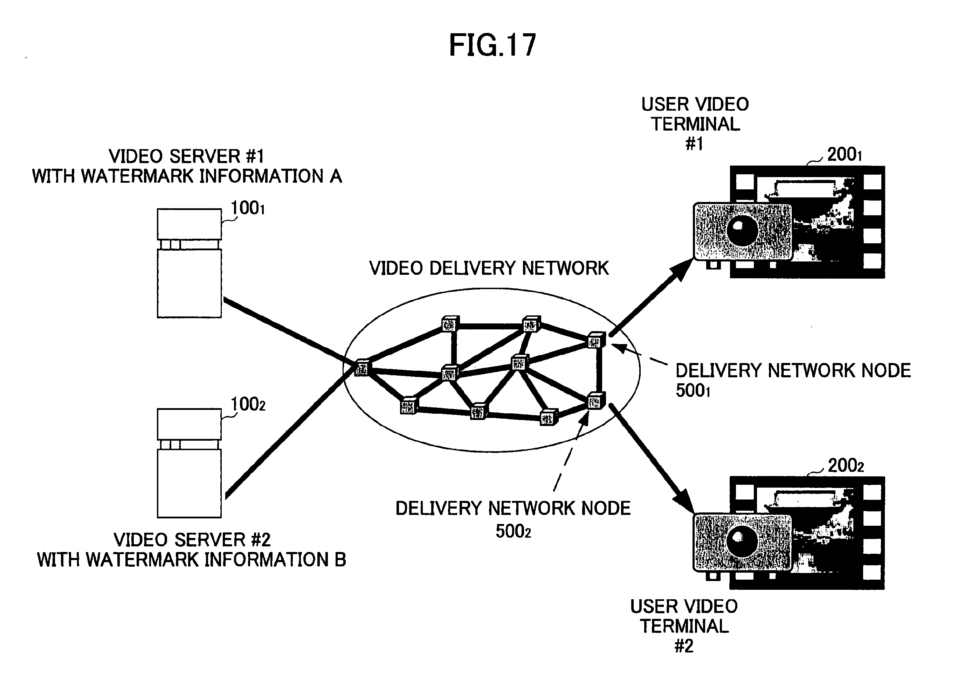

The illustrated system includes an image server 100, a terminal 200, a delivery network node 500, an addition ID extracting apparatus 300, and a network 400 interconnecting the image server 100, the terminal 200, and the delivery network node 500. It is noted that FIG.17 illustrates a network configuration including plural image servers, plural delivery network nodes, and plural terminals; detailed operations performed in such a case are described later with reference to FIG.17.

The system according to the present embodiment is characterized in that the functions of the ID information adding unit 130 of the imager server 100 in the second embodiment are realized in a delivery network node 500.

The delivery network node 500 includes an ID information adding unit 530 and a communication unit 510.

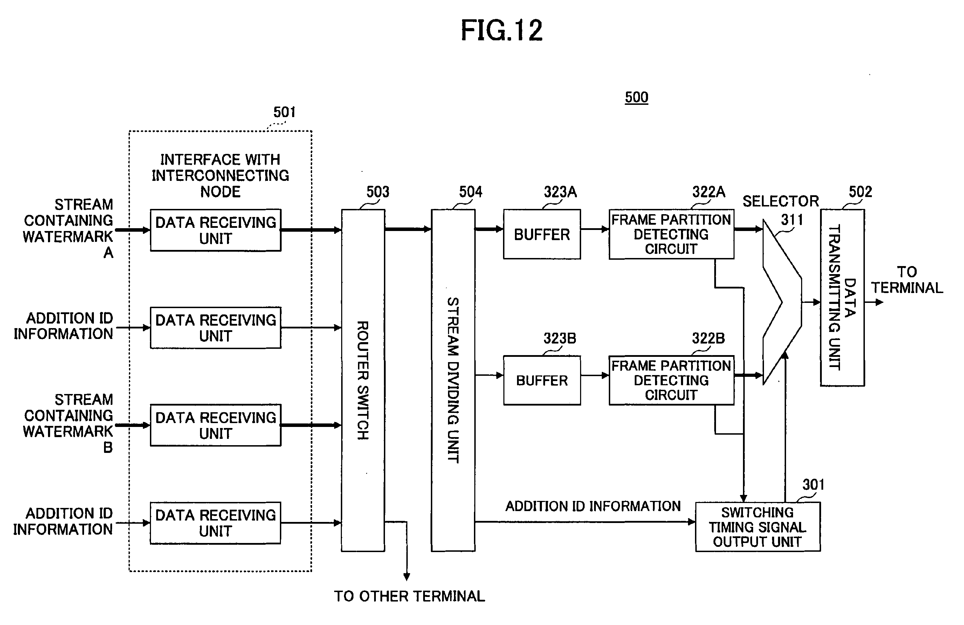

FIG.12 is a diagram illustrating a configuration of a delivery network node according to the third embodiment of the present invention. The illustrated delivery network node 500 includes an interface 501 with an interconnecting node, a data transmitting unit 502, a router switch 503, a stream separating unit 504, two buffers 323A and 323B, two frame partition detecting circuits 322A and 322B, a selector 311, and a switching timing signal output unit 301. It is noted that in the example illustrated in FIG.12, the addition ID information is received from the image server, the terminal, or another node, for example, via the network 400; however, addition ID information kept in the delivery network node may be used as well.

The interface 501 with an interconnecting node (e.g., another delivery network node) includes plural data receiving units. Encoded moving image streams including watermark information A and B, respectively, and addition ID information may be received through one of the data receiving units of the interface 501 with an interconnecting node. The router switch 503 for separating and transmitting data is configured to separate data for each destination terminal and delivery network to which a moving image is to be delivered. The received data are separated into two moving image streams along with addition ID information. Then, selection and composition processes are performed on the two streams by the selector 311 according to the addition ID information in a manner similar to that described in FIG.8, and a moving image stream in accordance with the addition ID information is transmitted from the data transmitting unit 502 to the destination terminal 200. It is noted that in another example, the output of the selector 311 may be transmitted via the router switch 503 so that data may be output from a data transmitting unit 502 in accordance with the data transmission destination.

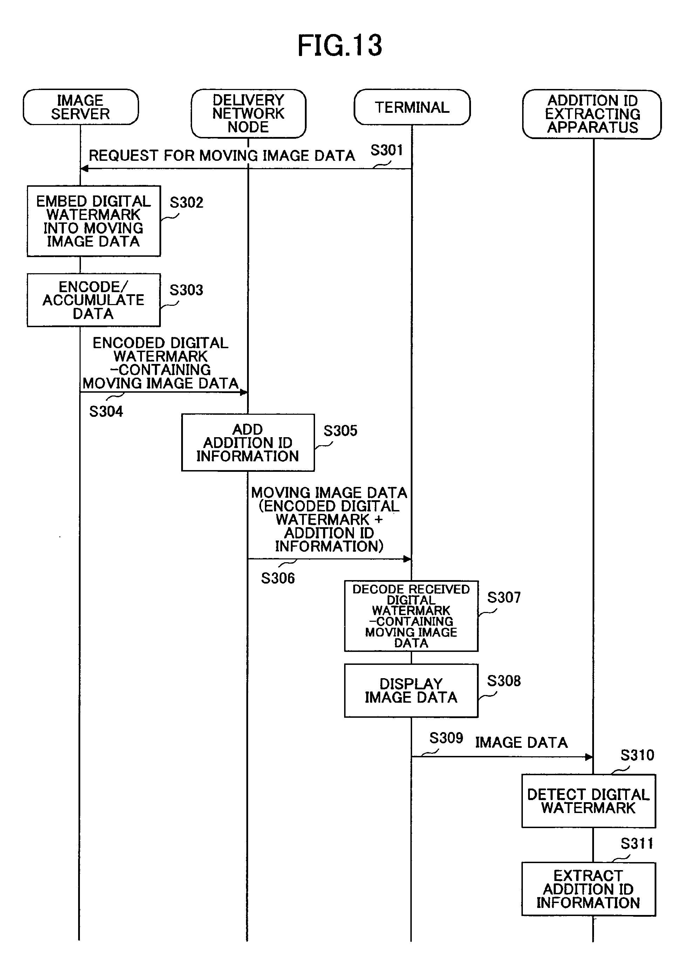

FIG.13 is a sequence chart illustrating operations according to the third embodiment of the present invention.

Step 301: issue and transmit a request for moving image data from the terminal 200 to the image server 100 via the delivery network node 500.

Step 302: in the image server 100, when the communication unit 101 receives the request from the terminal 200, read the moving image data from the moving image DB 110, and embed digital watermarks into the moving image data at the encoded data generating unit 120.

Step 303: further, at the encoded data generating unit 120, perform encoding/compression processes on the digital watermark-embedded moving image data and store the encoded moving image data.

Step 304: transmit the stored moving image data from the communication unit 101 to the delivery network node 500.

Step 305: at the communication unit 510 of the delivery network node 500, receive plural sets of encoded/compressed moving image data with differing digital watermarks embedded therein that are transmitted from the image server 100; and at the ID information adding unit 530, select/discard the received moving image data based on addition ID information, add ID information to the selected moving image data, and recompose the selected moving image data to generate one moving image data series.

Step 306: transmit the recomposed moving image data (series) via the network 400 to the terminal requesting for the moving image data.

Step 307: in the terminal 200, receive the moving image data (series) delivered from the image server 100 at the network receiving unit 243, and decode the received moving image data at the image decoding unit 241.

Step 308: display the decoded moving image data at the display unit 242.

Step 309: input the image data displayed by the display unit 242 to the addition ID information extracting apparatus 300.

Step 310: in the addition ID information extracting apparatus 300, detect the digital watermark from the input image data at the addition ID detecting unit 350.

Step 311: retrieve addition ID information from the series of detected watermarks.

### (Examples)

In the following, specific examples of the present invention are described with reference to the accompanying drawings.

### [First Example]

The present example illustrates a specific example of embedding addition ID information into encoded digital watermark-embedded moving image data.

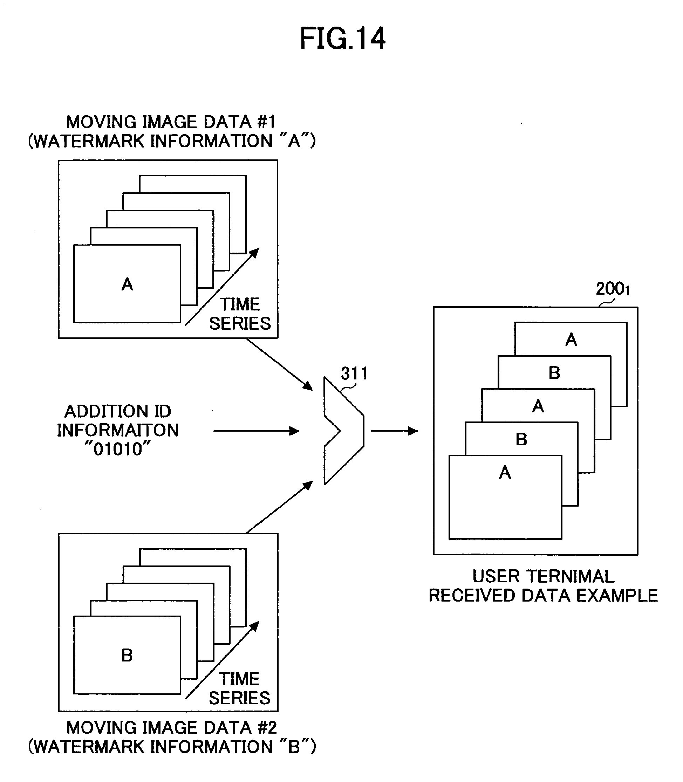

FIG.14 is a diagram illustrating a case of adding five bits of ID information according to the first example.

This drawing illustrates an example of decomposing/composing a video stream in frame units (time series) according to addition ID information, wherein each bit of the addition ID information indicates the type of digital watermark to be retrieved.

This drawing illustrates a case in which the selector 311 selects frames from two series of moving image data (video streams) corresponding to identical video contents having two types of digital watermarks "A" and "B" added thereto, the selection being based on addition ID information "01010" which results in the composition of addition ID information-containing moving image data made up of five consecutive frames; namely, a first frame with digital watermark "A", a second frame with digital watermark "B", a third frame with digital watermark "A", a fourth frame with digital watermark "B", and a fifth frame with digital watermark "A".

At the reception side, "ABABA" is detected from the consecutive frames to determine the addition ID information "01010". It is noted that although two types of digital watermarks are used in the illustrated example, as a general rule, when 2ⁿ types of digital watermarks are used, n bits of addition ID information may be used to indicate the type of digital watermark.

Generally, the manner in which digital watermarks are added and the manner in which the digital watermarks are detected are kept as confidential information by the rightful owner of the contents. In the case of using the conventional spectral diffusion scheme of FIG.1, the insertion position of watermark information bits on the divided image plane and the pseudo random number data correspond to confidential data. Such data may not be known to users of the contents. When the contents are illegally copied and distributed, the rightful owner may conduct watermark detection on the distributed contents to acquire the addition ID information.

The addition ID information may include static information pertaining to the video contents such as title information and copyright information, the registered number of the apparatus including the ID information adding unit 30, and the delivery destination user name, the delivery time/date, and the delivery route over the network for each contents delivery session, for example. By adding unique information to the contents being delivered, an illegal user may be accurately identified. It is noted that in the case of encoding the addition ID information, encryption of the addition ID information may be performed (in such a case, decoding of the encryption is performed in the addition ID decoding process performed at the addition ID extracting side).

### [Second Example]

In the following, another example of adding addition ID information is described where video contents are composed by selecting one group of consecutive frames per unit from plural groups of image data series having differing sets of digital watermark information according to addition ID information which video contents are then delivered.

It is noted that in an encoding scheme represented by the MPEG scheme that relies on interframe difference in information compression, the encoded video stream may not be decomposed into individual frame data units. However, even in such an encoding scheme, the encoding process is still performed in units of the so-called GOP (Group of Pictures) made up of several to several dozen frames. Accordingly, instead of changing the watermark information in frame units, contents including watermark information may be selected in GOP units according to the addition ID information to compose one stream.

### [Third Example]

The example described below illustrates a case of spatially dividing individual image frames, selecting from plural image data series having differing digital watermark information one divided image plane region per unit according to addition ID information, composing plural of the selected divided image plane regions, and reproducing the composed video contents.

In the case of using image plane division in adding addition ID information, a number of connections equal to the number of image plane divisions are established between the moving image server and the delivery network node for each type of watermark information. Specifically, when the division number is equal to n, and two types of watermark information, A and B, are used, 2n connections are established. Then, for each connection, a frame partition symbol-containing video stream of one divided image plane is transmitted from the moving image server to the delivery network node, and either a video frame containing digital watermark A or a video frame containing digital watermark B is selected per divided image plane unit according to the addition ID information (i.e., 0 or 1). Then, the selected divided image planes are composed into data for transmission to a user video terminal.

It is noted that the selection per divided image plane unit and the selection per frame unit may be used together. For example, time/date information may be embedded in the selection process performed per divided image unit, and other information may be embedded in the selection process performed per frame unit. A code representing each frame may be set using one divided image plane as a parity bit, wherein if the number of divided image planes representing "1" out of all the divided image planes corresponds to an even number, the code is set to "0", and if this number corresponds to an odd number, the code is set to "1", for example.

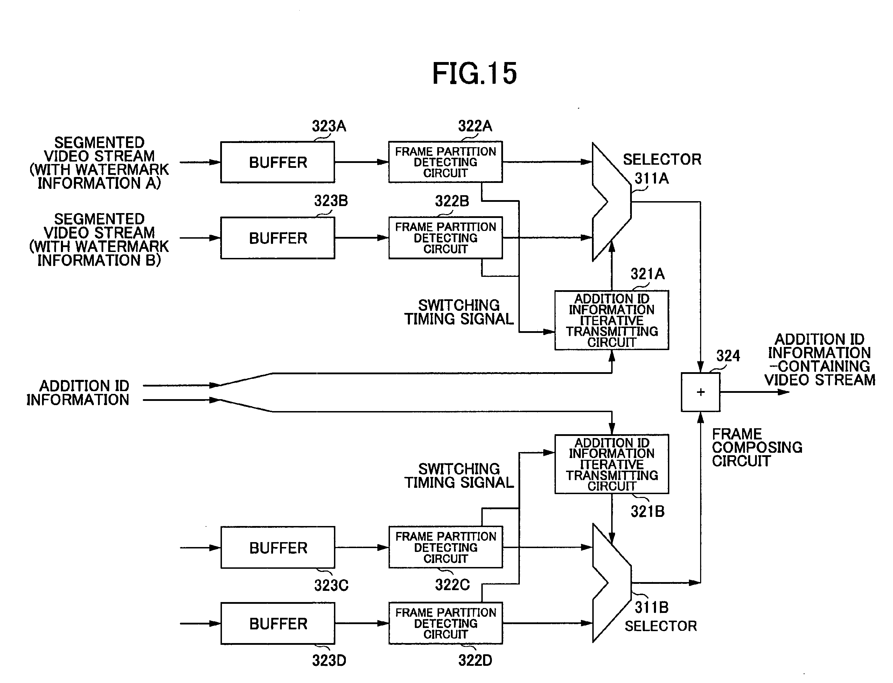

FIG.15 is a diagram showing a configuration of an ID information adding circuit that decomposes/composes a video stream in divided image plane units according to the third example. This drawing illustrates a method of assigning digital watermark information to each divided region of frames of a moving image. In the illustrated example, first, an image plane is divided into two regions; namely, into left and right side regions or upper and lower regions. Then, using four buffers 323A, 323B, 323C, 323D, and four frame partition detecting circuits 322A, 322B, 322C, 322D, two differing types of addition ID information are added to each region. For example, in the case where the image plane is divided into upper and lower regions, the buffers 323A, 323B and the frame partition detecting circuits 322A, 322B may be used for the upper image plane region, and the buffers 323C, 323D, and the frame partition detecting circuits 322C and 322D may be used for the lower divided image plane region.

In the example of FIG.15, addition ID information of two bits may be used per frame period. Selectors 311A and 311B are used to determine whether to select the video contents (stream) including the watermark A or B for the two divided regions, respectively. The elements of the divided image planes selected for the respective regions are combined at a frame composing circuit 324 and output. It is noted that in this example, it is assumed that the respective regions contain digital watermark information. Specifically, for example, in the case of using the watermark information A and B, at the moving image server, an image plane is divided into regions, and a moving image containing watermark A and a moving image containing watermark B are generated from the moving image of the respective regions after which the generated moving images are encoded.

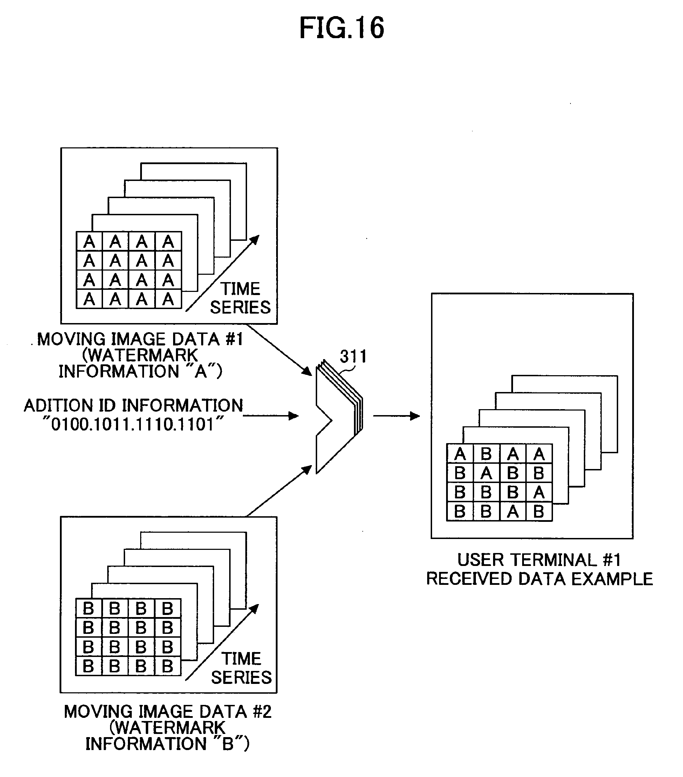

FIG.16 is a diagram illustrating a case of decomposing and composing a video stream in divided image plane units based on addition ID information according to the third example. In the illustrated example, an image plane is divided into 16 regions, and a frame is selected per divided region from video contents (streams) including two differing types of digital watermark information after which the selected frames are composed. In this case, 16 bits of information may be used as addition ID information per frame. In order to detect the addition ID information, each frame of a received image may be divided into 16 regions, and a digital watermark detecting circuit may be used to detect which watermark information is included in each of the divided regions.

According to the method using image plane division as is described above, the amount of information that may be added to one frame may be increased by increasing the number of image plane divisions. However, with such an increase, the number of pixels per divided image plane is decreased resulting in the degradation of the detection accuracy of the digital watermark information. In a case where an upper limit is imposed on the number of divisions, a method of developing addition ID information between frames in the temporal direction may be used along with the above method.

It is noted that the above-described means for assigning differing types of digital watermarks to one type of video contents to create plural video streams, and decomposing and composing the video streams according to addition ID information may be implemented at the image server 100 according to the previously-described second embodiment. Also, the above means may be implemented at an edge delivery network node 500 that is closest to the user terminal 200 in the network delivery system according to the previously-described third embodiment.

### [Fourth Example]

The present example illustrates a case of applying the system according to the third embodiment to a video delivery technique using plural video streams corresponding to identical video contents with differing watermark information.

FIG.17 is a diagram illustrating an exemplary video delivery system according to a fourth example of the present invention. As is shown in the drawing, the present system includes video servers 100 as image servers, user terminals 200, and plural delivery network nodes 500 provided between the user terminals 200 and the video servers 100, wherein each content user/user (video) terminal is arranged to be connected to a designated delivery network node 500.

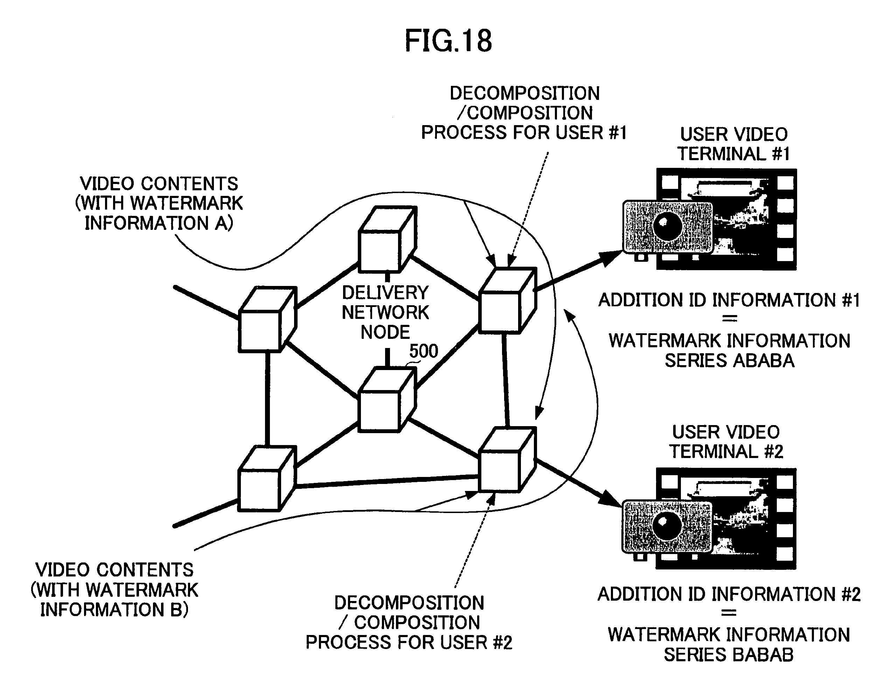

FIG.18 is a diagram illustrating an exemplary case of performing stream decomposition/composition in a delivery network node using two video streams according to the fourth example of the present invention.

According to the present example, instead of composing a video stream for each user at the video server 100 and individually delivering the video stream over the network 400, two or more series of video streams containing differing digital watermark information may be decomposed/composed according to addition ID information for each user at the delivery network node 500 as is shown in FIG.18. In this way, the capacity of video streams distributed over the entire network may be limited to a certain number regardless of the number of users, and thereby, the required network transmission capacity may be significantly reduced.

In the following, the delivery network node 500 used in the fourth example is described in greater detail. The delivery network node 500 used in the fourth example includes the configuration shown in FIG.12. As is shown in FIG.12, the delivery network node 500 is configured to receive a stream including digital watermark A, a stream including digital watermark B, and addition ID information from another node. It is noted that the addition ID information may be generated by an ID information adding unit (not shown) that is provided in the delivery network node 500. Also, it is noted that in the example shown in FIG.12, plural types of addition information may be received.

The addition ID information may include moving image identification information, time/date information, and user information, for example, details of which are described below.

The moving image identification information may be transmitted to the delivery network node 500 from the image server (video server) and/or an image data management server (not shown), and may include content ID and/or copyright ID information unique to the moving image contents, and ID information unique to the image server such as IP address information and/or MAC address information, for example.

The time/date information may be transmitted from an online time server using a time information protocol (e.g., NTP, Network Time Protocol, RFC-1305), for example. The time/date information to be added corresponds to the timing at which the time/date information is added as addition ID information and is obtained from the time server by the delivery network node 500. In this way, the time and date at which the video stream passes the delivery network node 500 may be recorded.

The user information may be transmitted from the user video terminal 200, and/or user management server (not shown), for example, and may include ID information unique to the user video terminal 200 such as IP address information and/or MAC address information, for example.

Also, the delivery network node 500 may use its own identification information as the addition ID information. The identification information of the delivery network node 500 may include ID information unique to the delivery network node such as IP address information and/or MAC address information, for example.

It is noted that in the case of using corresponding IP address information as ID information unique to the image server and ID information unique to the user video terminal, a source address and a destination address may be acquired from a header portion of an IP packet, and the acquired address information may be used as addition ID information. Also, in the case of using MAC address information, a source MAC address and a destination MAC address may be acquired from a header portion of the Ethernet, and the acquired address information may be used as addition ID information.

Also, it is noted that content ID and copyright ID that are unique to the moving image contents may be embedded as moving image identification information into one or both of digital watermarks A and B. In this case, the delivery network node 500 does not have to newly add the content ID and/or copyright ID to moving image contents.

As is described above, an edge delivery network node 500 that is closest to a user video terminal 200 temporarily stores encoded video data series (video streams) as illustrated in FIG.6 with digital watermarks A and B transmitted from an image server in buffers 323A and 323B, respectively, as illustrated in FIG.12, and the data may be rearranged in proper order as is necessary or desired. Then, the frame partition detecting circuits 322A and 322B detect the frame head markers (frame partition symbols) of the respective video streams, and divide the respective streams into frame units. Then, the selector 311 selects one of the two video streams for each frame in response to a switching timing signal that is output by the switching timing signal output unit 301 and according to addition ID information (binary data represented by 0 and 1) to thereby create a video stream to be transmitted to another delivery network node 500 or a user video terminal 200.

Also, it is noted that a predetermined pattern (e.g., eight consecutive "0"s) is inserted to the front and back ends of addition ID information as partition symbols (delimiters), and the addition information is iteratively transmitted at predetermined intervals. By arranging an addition ID detecting apparatus to detect such delimiters, the iterative addition ID information may be reproduced.

In a case where video streams are delivered from an image server to a user video terminal via plural delivery network nodes 500 as is illustrated by the network configuration shown in FIG.17, differing addition ID information may be added at the intermediate delivery network nodes between the image server 100 and the user video terminal 200.

For example, at an edge delivery network node that is closest to an image server, ID information unique to the moving image server, ID information of the edge node, and time/date information pertaining to the timing at which the video streams pass through this node may be added. Then, at an intermediate delivery network node, ID information of this intermediate delivery network node and time/date information pertaining to the timing at which the video streams pass through this delivery network node may be added. Further, at an edge delivery network node that is closest to the user video terminal, ID information of this edge delivery network node, time/date information pertaining to the timing at which the vide streams pass through this delivery network node, and ID information unique to the user video terminal may be added.

According to such an arrangement, the respective delivery network nodes receive a video stream of digital watermark A and a video stream of digital watermark B in addition to the addition ID information and the video stream with delimiters added thereto.

The edge delivery network node that is closest to the user video terminal successively delivers the video stream of digital watermark B corresponding to "1", for example, to the user video terminal during the interval after the video stream with the respective items of addition ID information and the delimiters added thereto is delivered and before transmission of a next succession of addition ID information is started.

The delivery network nodes other than the edge delivery network node that is closest to the user video terminal operate in the manner described below. During the time the video stream with the respective addition ID information and the delimiters added thereto is being transmitted, only the video stream is delivered to the next delivery network node. During the time before transmission of the next succession of addition ID information is started, the video stream of the digital watermark A and the video stream of the digital watermark B are both directly transmitted. By transmitting the video streams of watermarks A and B in this manner, at the next delivery network node, further addition ID information may be added using the time during which both the video stream of the watermark A and the video stream of the watermark B are remaining at the node.

Therefore, the transmission interval for successively transmitting plural sets of addition ID information partitioned by the delimiters is determined in consideration of the length of the final addition ID information to be added. Also, in the case of successively adding differing addition ID information through intermediate network nodes, the required network transmission capacity may change depending on the number of users.

### [Fifth Example]

The present example relates to a case of composing three types of streams in the delivery network node 500 from two video streams.

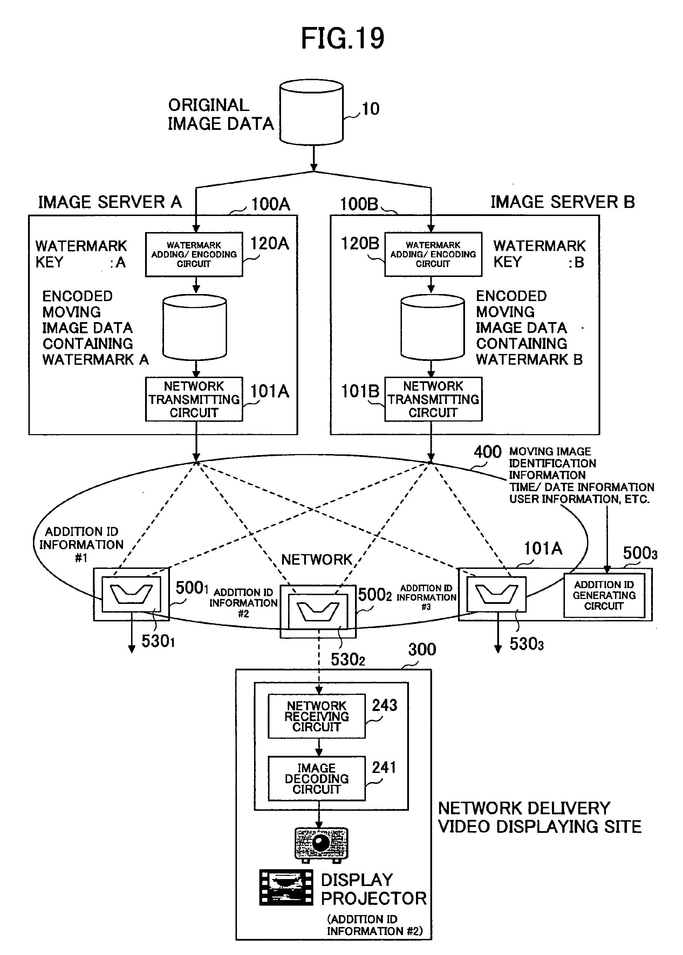

FIG.19 is a diagram illustrating the fifth example of the present invention. This drawing illustrates an example of adding two differing types of digital watermarks (A, B) to moving image data corresponding to the same original moving image data 10 using a watermark adding/encoding circuit 120, and storing the moving image data series respectively having the two differing types of watermarks (A, B) into two image servers 100A and 100B on the network 400.

The servers 100A and 100B transmit via network transmitting circuits 101A and 101B two series of moving image data to each of three delivery network nodes 500 having ID information adding circuits 530 that are connected to the network 400. Each delivery network node 500 is arranged to receive moving image data, generate addition ID information according to the site (terminal) at which the moving image data are to be displayed, and recompose a moving image data series by conducting a selecting/discarding process on the two series according to the generated addition ID information.

The composed moving image data series is received at the network receiving circuit 243 of the terminal 200 and decoded at the image decoding circuit 241 to be displayed/reproduced. In this case, even when the number of nodes and/or the number of sites (terminals) receiving the image data series is increased, the moving image data series may be identified by the different ID information, and thereby, only two types of large capacity moving image data series need to be transmitted over the network 400.

### [Sixth Example]

In one scenario, a malicious user may tamper with delivered contents by receiving at least two video streams and editing the received video streams to reconstruct one video stream. The present example illustrates measures for countering such an attack.

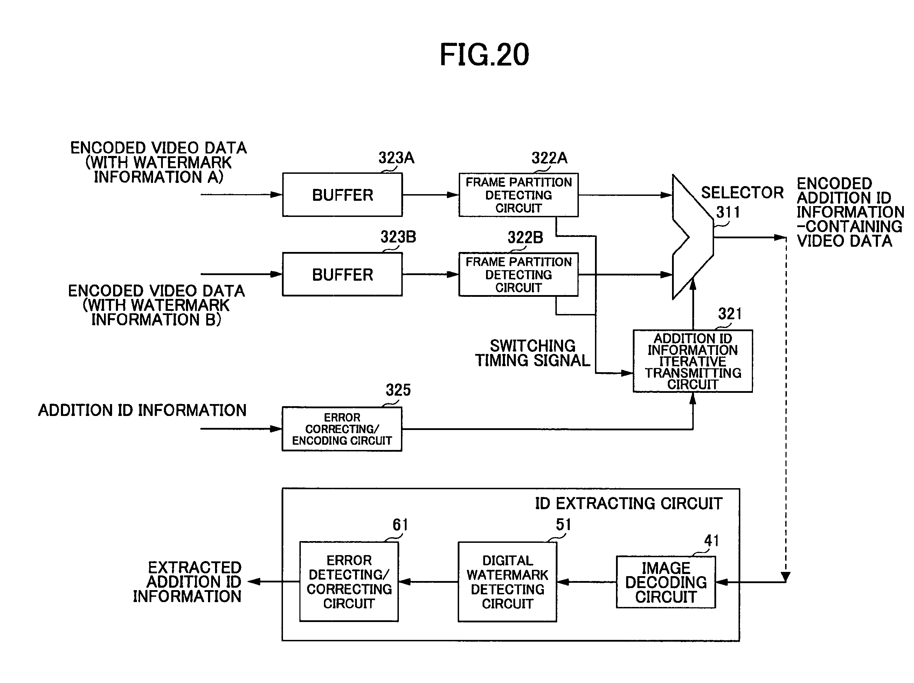

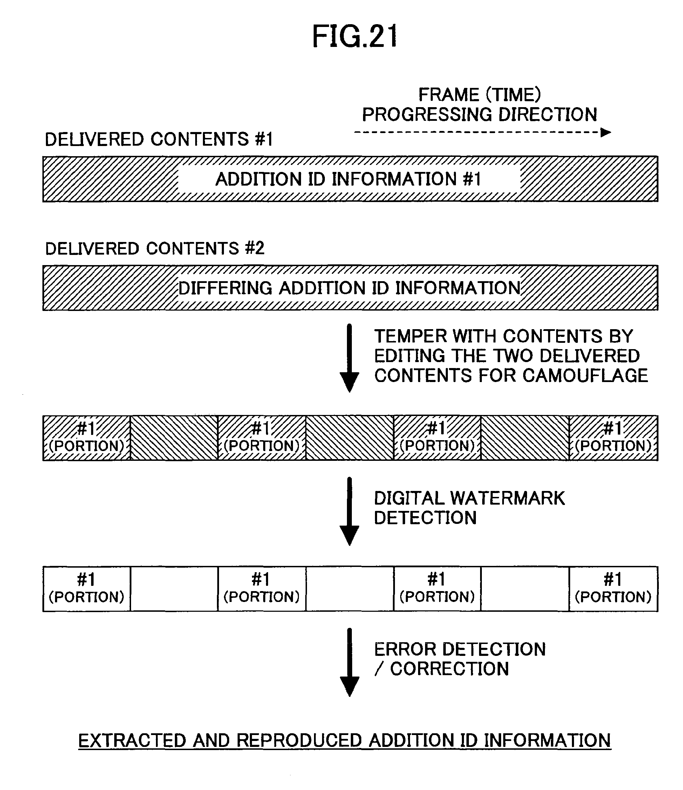

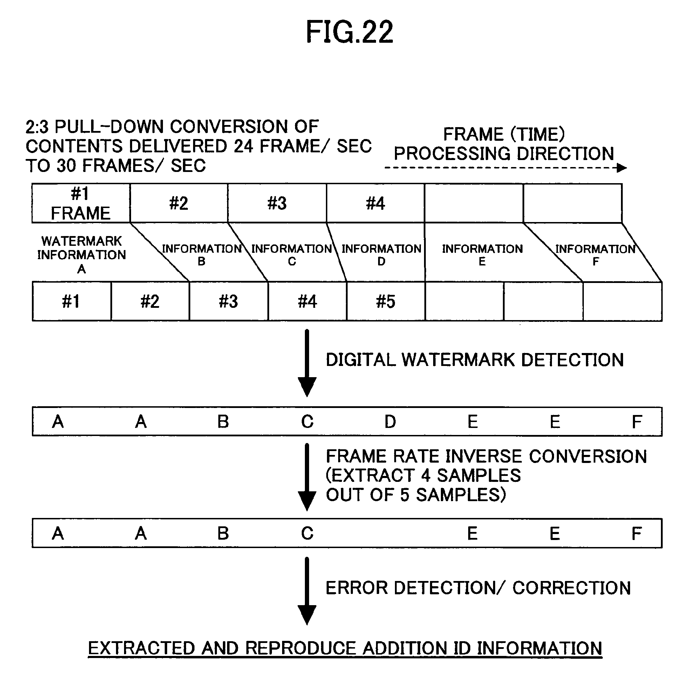

FIG.20 is a diagram illustrating a case of using error correction code as addition ID information according to a sixth example of the present invention; FIG.21 is a diagram illustrating a case of detecting addition ID information through error correction from edited/tampered with video contents according to the sixth example of the present invention; and FIG.22 is a diagram illustrating a case of detecting addition ID information through error correction from frame-rate-converted video contents according to the sixth example of the present invention.

In order to counter an attack made by a malicious user, an error correction encoding circuit 325 may be used to provide redundancy to the addition ID information beforehand as is shown in FIG.20.

In the example illustrated in FIG.21, when two sets of contents corresponding to the same contents with differing addition ID information included therein are received and a patched up stream is reconstructed through editing, the digital watermark information detected from this video stream may be in a shredded state. However, by providing redundancy to the addition ID information, the addition ID information in its original state may be properly reproduced.

Also, by implementing redundant encoding, addition ID information may be reproduced from frame-rate-converted video. For example, as is illustrated in FIG.22, in the case of performing 2:3 pull-down-conversion of a 24 frame/sec movie into a 30 frame/sec video adapted for television, one frame out of five frames of the 30 frames/sec video may overlap with a preceding frame. It is noted that whether such an overlapping portion appears periodically depends on the frame rate conversion method, and is thereby not limited to one way or the other. In the case of detecting digital watermark information from video contents converted according to various frame rate conversion methods to obtain the original series of digital watermark information at 24 frames/sec, the digital watermark information may be properly reproduced through error correction coding even when the frame-rate-converted series of watermark information is intermittently missing due to use of a given skipping method. Also, according to an embodiment of the present invention, the apparatus configuration shown in FIG.5 may be realized by a program. In such a case, the encoded data storage unit 24 of the encoded data generating unit 20 may be used as a storage medium such as a hard disk. Further, the program may be installed in a computer that is used as a digital watermark-containing moving image processing apparatus and be executed by control means such as a CPU. Also, the program may be distributed via a network.

Also, the apparatus configurations of the image server, the terminal, and the addition ID extracting apparatus may be realized by programs as well. In such a case, the programs may be installed in computers that are used as the image server, the terminal, and the addition ID extracting apparatus, and may be executed by control means such as a CPU. Also, such programs may be distributed via a network.

Similarly, the apparatus configurations of the image server, the terminal, the delivery network node, and the addition ID information extracting apparatus of FIG.11 may be realized by programs as well. The programs may be installed in computers being used as the image server, the terminal, the delivery network node, and the addition ID information extracting apparatus, and may be executed by control means such as a CPU. Also, the programs may be distributed via a network.

Also, it is noted that the programs may be stored in hard disk apparatuses or movable storage media such as a flexible disk or a CD-ROM that are connected to the computers used as the image server, the terminal, the delivery network node, and the addition ID information extracting apparatus. In such cases, the programs may be read from the storage media and executed by control means such as a CPU upon implementing the present invention.

As is described above, according to the present invention, a moving image data series with at least one of individual ID or security information for each individual user added thereto may be delivered according to a request issued by the relevant user. In this way, when contents copied with malicious intent are distributed to a third person, a determination may be made as to when and by whom the contents have been delivered so that a significant contribution may be made to preventing illegal copying of contents.

Particularly, as is illustrated in the configuration of delivery network nodes shown in FIG.17, by adding the time/date information pertaining to the timing at which identification information and addition ID information are added, the passage route of the relevant video stream may be determined so as to make a further contribution to preventing illegal copying.

Also, since text information may be added as digital watermark information beforehand, high-work load real-time processing may be unnecessary upon delivery.

Further, methods that require high computational work load and are not suitable for real-time processing may be used in the present invention, and thereby, a method of assigning a digital watermark with high resistance to processing and compression may be used. It is noted that there may be cases in which complete addition ID information cannot be retrieved from individual frames; however, provided that a subject video has a sufficient running time for serving its purpose of displaying video contents, addition ID information may be properly detected from such video.

Further, the present invention is not limited to the embodiments described above, and variations and modifications may be made without departing from the scope of the present invention.

## Claims

1. A digital watermark-containing moving image transmission system, comprising:
a moving image reproducing apparatus that includes
moving image input means for inputting one type of moving image data;
watermark-containing data generating means for embedding a plurality of differing sets of digital watermark information into the input moving image data, creating a plurality of watermark-containing moving image data series, and encoding the created watermark-containing moving image data series;
ID information adding means for generating a new moving image data series from the watermark-containing moving image data series based on addition ID information including coded information corresponding to at least one of moving image identification information, time/date information, and user information; and
reproducing means for decoding and displaying the moving image data series generated by the ID information adding means; and
an addition ID information detecting apparatus that divides the moving image data series displayed by the moving image reproducing apparatus into a plurality of regions, and detects the addition ID information for each of the divided regions using a digital watermark detecting circuit.

2. A digital watermark-containing moving image transmission system, comprising
at least one image server that includes
moving image input means for inputting one type of moving image data;
watermark-containing data generating means for embedding a plurality of differing sets of digital watermark information into the input moving image data, creating a plurality of watermark-containing moving image data series, and encoding the created watermark-containing moving image data series;
ID information adding means for generating a new moving image data series from the watermark-containing moving image data series based on addition ID information including coded information corresponding to at least one of moving image identification information, time/date information, and user information; and
moving image delivering means for delivering the moving image data series generated by the ID information adding means to a network;
at least one terminal that includes reproducing means for decoding and displaying the moving image data series generated by the ID information adding means; and
an addition ID detecting apparatus that divides the moving image data series displayed by the terminal into a plurality of regions, and detects the addition ID information for each of the divided regions using a digital watermark detecting circuit.

3. A digital watermark-containing moving image transmission system comprising:
at least one image server that includes
moving image input means for inputting one type of moving image data; and
watermark-containing data generating means for embedding a plurality of differing sets of digital watermark information into the input moving image data, creating a plurality of watermark-containing moving image data series, encoding the created watermark-containing moving image data series, and transmitting the encoded watermark-containing moving image data series to a network;
at least one delivery network node that includes
ID information adding means for generating a new moving image data series from the watermark-containing moving image data series based on addition ID information including coded information corresponding to at least one of moving image identification information, time/date information, and user information; and
moving image delivering means for delivering the moving image data series generated by the ID information adding means to the network;
at least one terminal that includes reproducing means for decoding and displaying the moving image data series received via the network; and
an addition ID detecting apparatus that divides the moving image data series displayed by the terminal into a plurality of regions, and detects the addition ID information for each of the divided regions using a digital watermark detecting circuit.

4. The digital watermark-containing moving image transmission system as claimed in any one of claims 1 through 3, wherein
the ID information adding means is configured to successively select one from a plurality of image frames of the plural moving image data series based on the addition ID information and output the successively selected image frames as the new moving image data series.

5. The digital watermark-containing moving image transmission system as claimed in any one of claims 1 through 3, wherein
the ID information adding means is configured to successively select one group from a plurality of groups of image frames of the plural moving image data series based on the addition ID information and output the successively selected group of image frames as the new moving image data series.

6. The digital watermark-containing moving image transmission system as claimed in any one of claims 1 through 3, wherein
each of a plurality of image frames of the plural moving image data series is spatially divided into a plurality of regions, and a plurality of divided region moving image data series are generated for each of the divided regions; and
the ID information adding means is configured to successively select one from a plurality of divided region image frames of the plural divided region moving image data series corresponding to one of the divided regions based on the addition ID information, compose the successively selected divided region image frames corresponding to said one of the divided regions with successively selected divided region image frames corresponding to another one of the divided regions, and output the composed divided region image frames as the new moving image data series.

7. The digital watermark-containing moving image transmission system as claimed in any one of claims 4 through 6, further comprising:
means for performing redundant encoding on the addition ID information beforehand.

8. A digital watermark-containing moving image transmission method for storing and displaying digital moving image data, the method comprising the steps of:
inputting one type of moving image data;
embedding a plurality of differing sets of digital watermark information into the input moving image data, creating a plurality of watermark-containing moving image data series, and encoding the created watermark-containing moving image data series;
generating a new moving image data series from the watermark-containing moving image data series based on addition ID information including coded information corresponding to at least one of moving image identification information, time/date information, and user information;
decoding and displaying the generated moving image data series; and
dividing the displayed moving image data series into a plurality of regions and detecting the addition ID information for each of the divided regions using a digital watermark detecting circuit.

9. A digital watermark-containing moving image transmission method for transmitting stored digital moving image data via a network and reproducing the digital moving image data at a terminal that is connected to the network, the method comprising:
steps performed by an image server connected to the network, which steps include
inputting one type of moving image data;
embedding a plurality of differing sets of digital watermark information into the input moving image data, creating a plurality of watermark-containing moving image data series, and encoding the created watermark-containing moving image data series;
generating a new moving image data series from the watermark-containing moving image data series based on addition ID information including coded information corresponding to at least one of moving image identification information, time/date information, and user information; and
delivering the generated moving image data series to the network;
steps performed by the terminal, which steps include decoding and displaying the moving image data series delivered from the image server via the network; and
steps performed by an addition ID information detecting apparatus connected to the terminal, which steps include dividing the moving image data series displayed by the terminal into a plurality of regions and detecting the addition ID information for each of the divided regions using a digital watermark detecting circuit.

10. A digital watermark-containing moving image transmission method for transmitting stored digital moving image data via a network and reproducing the digital moving image data at a terminal that is connected to the network, the method comprising:
steps performed by an image server connected to the network, which steps include
inputting one type of moving image data; and
embedding a plurality of differing sets of digital watermark information into the input moving image data, creating a plurality of watermark-containing moving image data series, encoding the created watermark-containing moving image data series, and delivering the encoded watermark-containing moving image data series to the network;
steps performed by at least one delivery network node on the network, which steps include
generating a new moving image data series from the watermark-containing moving image data series based on addition ID information including coded information corresponding to at least one of moving image identification information, time/date information, and user information; and
delivering the generated moving image data series to the terminal via the network;
steps performed by the terminal, which steps include decoding and displaying the moving image data series received via the network; and
steps performed by an addition ID information detecting apparatus connected to the terminal, which steps include dividing the moving image data series displayed at the terminal into a plurality of regions and detecting the addition ID information for each of the divided regions using a digital watermark detecting circuit.

11. An information processing apparatus that is configured to store and display digital moving image data, the apparatus comprising:
ID information adding means for generating a new moving image data series from a plurality of moving image data series corresponding to identical video contents having differing identification information added thereto as digital watermarks, the new moving image data series being generated based on addition ID information including coded information corresponding to at least one of moving image identification information, time/date information, and user information.

12. An information processing apparatus that is configured to transmit stored digital moving image data via a network, the apparatus comprising:
moving image input means for inputting one type of moving image data;
watermark-containing data generating means for embedding a plurality of differing sets of digital watermark information into the input moving image data, creating a plurality of watermark-containing moving image data series, and encoding the created watermark-containing moving image data series; and
ID information adding means for generating a new moving image data series from the watermark-containing moving image data series based on addition ID information including coded information corresponding to at least one of moving image identification information, time/date information, and user information.

13. The information processing apparatus as claimed in claim 11 or 12, wherein
the ID information adding means is configured to successively select one from a plurality of image frames of the moving image data series based on the addition ID information and output the successively selected image frames as the new moving image data series.

14. The information processing apparatus as claimed in claim 11 or 12, wherein
the ID information adding means is configured to successively select one group from a plurality of groups of image frames of the moving image data series based on the addition ID information and output the successively selected group of image frames as the new moving image data series.

15. The information processing apparatus as claimed in claim 11 or 12, wherein
each of a plurality of image frames of the moving image data series is spatially divided into a plurality of regions, and a plurality of divided region moving image data series are generated for each of the divided regions; and
the ID information adding means is configured to successively select one from a plurality of divided region image frames of the divided region moving image data series corresponding to one of the divided regions based on the addition ID information, compose the successively selected divided region image frames corresponding to said one of the divided regions with the successively selected divided region image frames corresponding to another one of the divided regions, and output the composed divided region image frames as the new moving image data series.

16. The information processing apparatus as claimed in any one of claims 13 through 15, further comprising:
means for performing redundant encoding on the addition ID information beforehand.

17. A communication control apparatus in a system including a server and a terminal that are connected to a network, the apparatus comprising:
means for receiving a plurality of watermark-containing moving image data series from the server or another communication apparatus;
ID information adding means for generating a new moving image data series from the received watermark-containing moving image data series based on addition ID information including coded information corresponding to at least one of moving image identification information, time/date information, and user information; and
moving image delivering means for delivering the moving image data series generated by the ID information adding means to the terminal or another communication control apparatus.

18. The communication control apparatus as claimed in claim 17, wherein
the moving image identification information includes at least one of content ID and copyright ID information unique to the moving image data, and ID information unique to the server corresponding to a sender of the moving image data.

19. The communication control apparatus as claimed in claim 17, wherein
the time/date information corresponds to information pertaining to a time/date when the new moving image data series is generated by the ID information adding means.

20. The communication control apparatus as claimed in claim 17, wherein
the user information corresponds to ID information unique to the terminal.

21. The communication control apparatus as claimed in claim 17, wherein
the addition ID information further includes coded information corresponding to ID information unique to the communication control apparatus in addition to at least one of the moving image identification information, time/date information, and user information.

22. The communication control apparatus as claimed in claim 17, wherein
the ID information adding means is configured to successively select one from a plurality of image frames of the moving image data series based on the addition ID information and output the successively selected image frames as the new moving image data series.

23. The communication control apparatus as claimed in claim 17, wherein
the ID information adding means is configured to successively select one group from a plurality of groups of image frames of the plural moving image data series based on the addition ID information and output the successively selected group of image frames as the new moving image data series.

24. The communication control apparatus as claimed in claim 17, wherein
each of a plurality of image frames of the moving image data series is spatially divided into a plurality of regions, and a plurality of divided region moving image data series is generated for each of the divided regions; and
the ID information adding means is configured to successively select one from a plurality of divided region image frames of the divided region moving image data series corresponding to one of the divided regions based on the addition ID information, compose the successively selected divided region image frames corresponding to said one of the divided regions with the successively selected divided region image frames corresponding to another one of the divided regions, and output the composed divided region image frames as the new moving image data series.

25. The communication control apparatus as claimed in any one of claims 21 through 24, further comprising:
means for performing redundant encoding on the addition ID information beforehand.

26. A digital watermark-containing moving image processing program run on a computer for controlling the computer to execute a process of storing and displaying digital moving image data, the program being executed by the computer to perform:
an ID information adding procedure for generating a new one from a plurality of moving image data series corresponding to identical video contents having differing identification information added thereto as digital watermarks, the new moving image data series being generated based on addition ID information including coded information corresponding to at least one of moving image identification information, time/date information, and user information.

27. A digital watermark-containing moving image processing program run on a computer for controlling the computer to execute a process of storing and displaying digital moving image data, the program being executed by the computer to perform:
a moving image input procedure for inputting one type of moving image data;
a watermark-containing data generating procedure for embedding a plurality of differing sets of digital watermark information into the input moving image data, creating a plurality of watermark-containing moving image data series, and encoding the created watermark-containing moving image data series;
an ID information adding procedure for generating a new moving image data series from the watermark-containing moving image data series based on addition ID information including coded information corresponding to at least one of moving image identification information, time/date information, and user information; and
a moving image delivering procedure for delivering the moving image data series generated in the ID information adding procedure to a network.

28. A digital watermark-containing moving image processing program run on a computer that is configured to function as a communication control apparatus in a system including a server and a terminal that are connected to a network, the program being executed by the computer to perform:
a procedure for receiving a plurality of watermark-containing moving image data series from the server or a first other communication control apparatus;
an ID information adding procedure for generating a new moving image data series from the received watermark-containing moving image data series based on addition ID information including coded information corresponding to at least one of moving image identification information, time/date information, and user information; and
a moving image delivering procedure for delivering the moving image data series generated in the ID information adding procedure to the terminal or a second other communication control apparatus.

29. A computer-readable medium storing a digital watermark-containing moving image processing program run on a computer for controlling the computer to execute a process of storing and displaying digital moving image data, the digital watermark-containing moving image processing program being executed by the computer to perform:
an ID information adding procedure for generating a new one from a plurality of moving image data series corresponding to identical video contents having differing identification information added thereto as digital watermarks, the new moving image data series being generated based on addition ID information including coded information corresponding to at least one of moving image identification information, time/date information, and user information.

30. A computer-readable medium storing a digital watermark-containing moving image processing program run on a computer for controlling the computer to process digital moving image data having digital watermarks embedded therein, the digital watermark-containing moving image processing program being executed by the computer to perform:
a moving image input procedure for inputting one type of moving image data;
a watermark-containing data generating procedure for embedding a plurality of differing sets of digital watermark information into the input moving image data, creating a plurality of watermark-containing moving image data series, and encoding the created watermark-containing moving image data series;
an ID information adding procedure for generating a new moving image data series from the watermark-containing moving image data series based on addition ID information including coded information corresponding to at least one of moving image identification information, time/date information, and user information; and
a moving image delivering procedure for delivering the moving image data series generated in the ID information adding procedure to a network.

31. A computer-readable medium storing a digital watermark-containing moving image processing program run on a computer that functions as a communication control apparatus in a system including a server and a terminal that are connected to a network, the digital watermark-containing moving image processing program being executed by the computer to perform:
a procedure for receiving a plurality of watermark-containing moving image data series from the server or a first other communication control apparatus;
an ID information adding procedure for generating a new moving image data series from the received watermark-containing moving image data series based on addition ID information including coded information corresponding to at least one of moving image identification information, time/date information, and user information; and
a moving image delivering procedure for delivering the moving image data series generated in the ID information adding procedure to the terminal or a second other communication control apparatus.
